# EUROPÄISCHE PATENTSCHRIFT

(11) **EP 1 912 835 B1**
(45) Veröffentlichungstag und Bekanntmachung des Hinweises auf die Patenterteilung: **11.07.2012**
(21) Anmeldenummer: 06776347.4
(22) Anmeldetag: 22.07.2006
(51) Int. Cl.: B60T 7/12, B60W 10/18, B60W 30/16, B60W 30/18, B60T 7/22, B60W 10/06

(54) **VORRICHTUNG ZUR SICHERSTELLUNG DES STILLSTANDES EINES KRAFTFAHRZEUGES**
DEVICE FOR ENSURING THE IMMOBILISATION OF A MOTOR VEHICLE
DISPOSITIF DE GARANTIE DE L'ARRET D'UN VEHICULE AUTOMOBILE

(30) Priorität: 02.08.2005 DE 102005036217
(43) Veröffentlichungstag der Anmeldung: 23.04.2008
(73) Patentinhaber: Bayerische Motoren Werke Aktiengesellschaft, 80809 München (DE)
(72) Erfinder: TSCHERNOSTER, Oliver, 80939 München (DE); HASS, Carsten, 85445 Oberding (DE); THISSEN, Sonja, 80809 München (DE); KEMPENAARS, Leander, 81539 München (DE); SCHEINOST, Christian, 84030 Ergolding (DE); ADIPRASITO, Bartono, 85467 Neuching (DE); LAIOU, Maria-Christina, 80796 München (DE); PFEIFFER, Andreas, 83607 Holzkirchen (DE)
(86) Internationale Anmeldenummer: PCT/EP2006/007235
(87) Internationale Veröffentlichungsnummer: WO 2007/014663

(56) Entgegenhaltungen:
- EP-A- 1 410 940
- WO-A-03/039925
- DE-A1- 10 238 870
- DE-A1- 19 838 885

## Beschreibung

Die Erfindung betrifft eine Vorrichtung zur Sicherstellung des Stillstandes eines Kraftfahrzeuges nach dem Oberbegriff des Patentanspruchs 1.

Eine derartige Vorrichtung zur Sicherstellung des Stillstandes eines Kraftfahrzeuges ist beispielweise aus der DE 198 38 885 A1 bekannt, insbesondere in Verbindung mit einem Fahrzeuggeschwindigkeitssystem und einer Feststellbremse.

Zum weiteren technischen Umfeld wird beispielsweise auf die DE 101 52 632 A1, die DE 102 38 870 A1, die EP 1 410 940 A und die WO 03/039925 A verwiesen.

Es befinden sich bereits Fahrzeuge auf dem Markt, die einen Geschwindigkeitsregler mit Abstandssensorik aufweisen. Ein solches Fahrzeug versucht insbesondere bei Fahrt auf einer Autobahn oder einer Schnellstraße eine vorgebbare Fahr-Geschwindigkeit einzuhalten, nimmt diese jedoch zurück, wenn sich dieses Fahrzeug einem vorausfahrenden Fahrzeug (Zielobjekt) nähert. Hierdurch wird für den Fahrzeug-Fahrer auch ein äußerst komfortables Fahren im Kolonnen-Verkehr ermöglicht, da der Geschwindigkeitsregler mit Abstandssensorik (z. B. ACC "Active Cruise Control" genannt) stets einen ausreichenden Sicherheitsabstand zum "Vordermann" einhält. Wenn das vorausfahrende Fahrzeug beschleunigt, so beschleunigt der Geschwindigkeitsregler mit Abstandssensorik (im folgenden auch "ACC-System" genannt) auch das damit ausgestattete Fahrzeug, und zwar bis zum Erreichen der gesetzten Wunschgeschwindigkeit oder der Geschwindigkeit des vorausfahrenden Fahrzeugs, falls dieses langsamer als die Wunschgeschwindigkeit fährt.

Als Ergänzung zu den ACC-Systemen, die im höheren Geschwindigkeitsbereich überwiegend auf gut strukturierten Straßen betrieben werden, sind auch sogenannte Stop&Go-Systeme bekannt, die eine vergleichbare Fahrerunterstützung insbesondere im niedrigen Geschwindigkeitsbereich bis hin zum Stillstand des Fahrzeugs ermöglichen. Diese Systeme benötigen neben einer leistungsfähigen Nahbereichssensorik ein elektronisch ansteuerbares Bremssystem, das in der Lage ist, das Fahrzeug in der Stillstandsphase zuverlässig zu halten und ein Weiterrollen zu verhindern, bis der Fahrer des Fahrzeugs oder das Stop&Go-System selbst ein entsprechendes Kommando zum Anfahren (Anfahrbefehl) gegeben hat.

Es ist Aufgabe der Erfindung, ein derartiges abstandsbezogenes Geschwindigkeitsregelsystem mit Stop&Go-Funktion hinsichtlich Komfort einerseits und schnellem Ansprechverhalten andererseits zu verbessern.

Die Aufgabe wird durch die Merkmale des Patentanspruchs 1 gelöst. Vorteilhafte Weiterbildungen sind Inhalt der abhängigen Patentansprüche.

In der Zeichnung ist ein besonders vorteilhaftes Ausführungsbeispiel dargestellt. Es zeigt
- Fig. 1: eine schematische Übersicht der für die Erfindung verwendbaren Fahrzeugkomponenten und
- Fig. 2: die Momentenverläufe aufgrund des erfindungsgemäßen Systemverhaltens

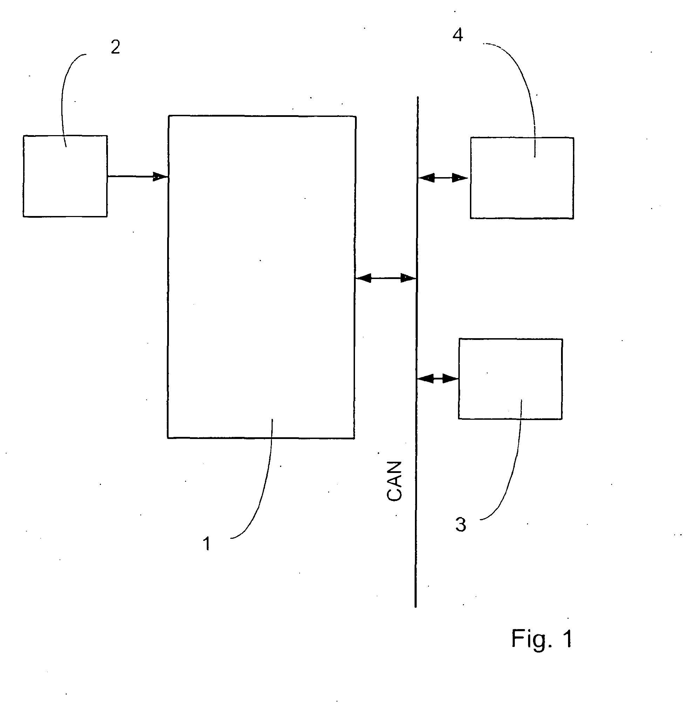

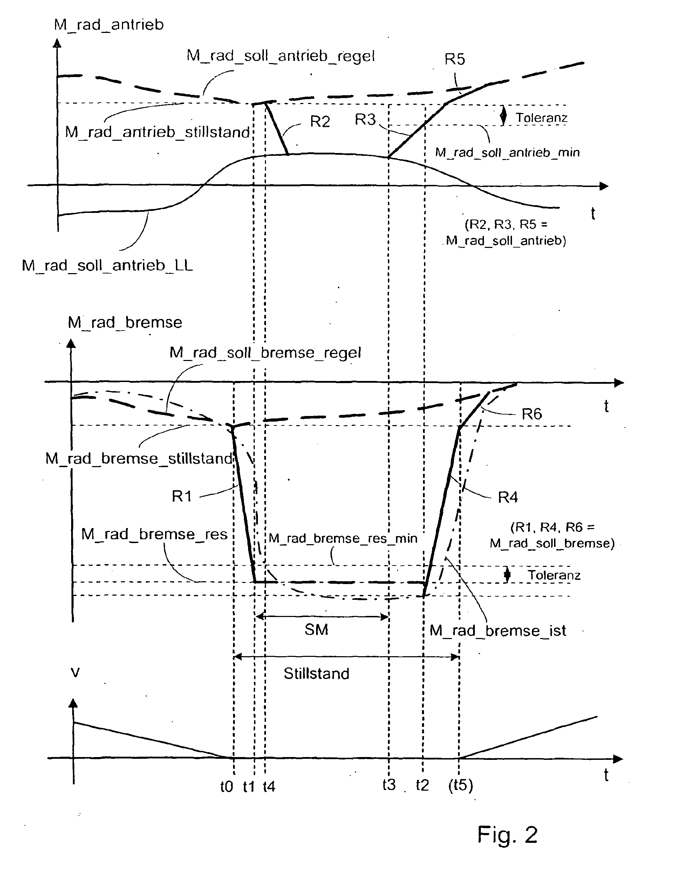

Die erfindungsgemäße Vorrichtung zur Sicherstellung des Stillstandes eines Kraftfahrzeuges weist gemäß Fig. 1 ein in einem ersten elektronischen Steuergerät enthaltenes abstandsbezogenes Längsdynamikregelmodul 1 auf, das mit einer Abstandssensorik 2 verbunden ist, und durch das das Kraftfahrzeug unter Einhaltung eines bestimmten Abstandes zu einem Zielobjekt bis zum Stillstand abgebremst werden kann. Zur Einhaltung eines bestimmten Abstandes oder einer vorgegebenen Fahrzeuggeschwindigkeit gibt das Längsdynamikregelmodul 1 beispielsweise in bekannter Weise eine Sollbeschleunigung aus, die wiederum in ein Sollantriebsmoment und/oder in ein Sollbremsmoment, beispielsweise bezogen auf Radmomente, umgesetzt wird. Das Sollantriebsmoment (M_rad_soll_antrieb, M_rad_soll_antrieb_regel; Fig. 2) wird vom Längsdynamikregelmodul 1 beispielsweise über eine Datenbusverbindung (z. B. CAN) an ein Antriebssteuergerät 4 zur Steuerung des Antriebsmotors und gegebenenfalls eines Getriebes übermittelt. Das Sollbremsmoment (M_rad_soll_bremse, M_rad_soll_bremse_regel; Fig. 2) wird vom Längsdynamikregelmodul 1 beispielsweise ebenfalls über eine Datenbusverbindung CAN an ein Bremsregelmodul 3 zur Steuerung eines Bremsregelsystems (ASC- oder DSC-Bremssystem (beispielsweise von BMW) oder Feststellbremse) übermittelt.

In Fig. 2 sind im oberen Diagramm das Antriebsmoment M_rad_antrieb, im mittleren Diagramm das Bremsmoment M_rad_bremse und im unteren Diagramm die Fahrgeschwindigkeit v jeweils über der Zeit t aufgetragen. Die gestrichelten Linien zeigen mögliche vom Längsdynamikregelmodul 1 berechnete Regelgrößen für das Sollantriebsmoment M_rad_soll_antrieb_regel und für das Sollbremsmoment M_rad_soll_bremse_regel abhängig vom Abstand des Zielobjekts im Stop & Go Betrieb. Diese Regelgrößen werden für die Dauer der erfindungsgemäßen Steuerung des Antriebsmoments (M_rad_soll_antrieb beispielsweise entsprechend den Rampen R2, R3 und R5) und des Bremsmoments (M_rad_soll_bremse beispielsweise entsprechend den Rampen R1, R4 und R6) insbesondere während des Stillstands (durchgezogene Linien) nicht umgesetzt.

Bis zum Erreichen des Stillstandes zum Zeitpunkt t0 wird vom Längsdynamikregelmodul 1 an das Bremsregelmodul 3 ein Sollbremsmoment M_rad_soll_bremse_regel vorgegeben. Zu einem ersten definierten Zeitpunkt t1 nach erkanntem Stillstand des Kraftfahrzeugs wird vom Längsdynamikregelmodul 1 ein Übergabesignal an das Bremsregelmodul 3 übermittelt, worauf das Bremsregelmodul 3 unabhängig von der Vorgabe eines Sollbremsmoments M_rad soll_bremse durch das Längsdynamikregelmodul 1 selbstständig ein Radbremsmoment im Sinne einer Feststellbremsfunktion aufbaut und/oder hält. Das Bremsregelmodul 3 bestätigt die Übergabe. Diese Phase des eigenständigen Einstellens eines Bremsmoments durch das Bremsregelmodul 3 allein wird im folgenden auch als Dauer des Stillstandsmanagements SM bezeichnet. Die Dauer des Stillstandsmanagements SM beginnt zum ersten Zeitpunkt t1, auf den später noch näher eingegangen wird, und endet zum Zeitpunkt t3 eines Anfahrbefehls. Ein Anfahrbefehl kann ein Anfahrwunsch durch den Fahrer (z. B. durch Betätigung eines Weiterfahrtquittierungstasters) oder ein automatisches Losfahren bei Weiterfahrt des Zielobjekts sein. Mit dem Anfahrbefehl übernimmt das Längsdynamikregelmodul 1 wieder die Momentenvorgabe. Das Bremsmodul 3 bestätigt die Übernahme durch das Längsdynamikregelmodul 1, wenn die Bedingungen zur Verantwortungsübergabe an das Längsdynamikregelmodul 1 erfüllt sind. Andernfalls liegt ein Fehler vor, bei dem das Bremsregelmodul 3 das Fahrzeug weiter im Stillstand hält.

Durch die Übergabe der Halteverantwortung an das Bremsregelmodul 3 wird gewährleistet, dass auch bei einem Fehler im Längsdynamikregelmodul 1 das Fahrzeug weiterhin sicher im Stillstand gehalten werden kann.

Zu einem definierten zweiten Zeitpunkt t2 nach dem Anfahrbefehl zum Zeitpunkt t3 (t3 könnte auch gleich t2 sein; hier nicht dargestellt) gibt das Längsdynamikregelmodul 1 beginnend mit dem zu diesem Zeitpunkt vorliegenden Istbremsmoment M_rad_bremse_ist wieder selbst ein Sollbremsmoment M_rad_soll_bremse zum Abbau des Radbremsmoments, hier entsprechend der Rampe R4, an das Bremsregelmodul 3 vor.

Vorzugsweise ist der erste Zeitpunkt t1 nach erkanntem Stillstand t0 des Kraftfahrzeugs zur Übermittlung des Übergabesignals durch das Erreichen eines Sicherheits-Sollbremsmoments M_rad_bremse_res definiert, das nach dem erkannten Stillstand durch Vorgabe des Längsdynamikregelmoduls 1 vom Bremssteuermodul 3 eingestellt wird. Gemäß dem hier dargestellten Ausführungsbeispiel wird das Sicherheits-Sollbremsmoment M_rad_bremse_res ab erkanntem Stillstand bis zum ersten Zeitpunkt t1 durch Vorgabe eines Sollbremsmoments M_rad_soll_bremse entsprechend der ersten Rampe R1 eingestellt. Der Zeitpunkt t1 könnte auch gleich dem Zeitpunkt t0 sein (hier nicht dargestellt), wenn anstelle einer Rampe eine sprungförmige Ansteuerung eines Sicherheits-Sollbremsmoments vorgegeben werden würde. Die rampenförmige Ansteuerung ist hinsichtlich des Komforts jedoch besonders vorteilhaft.

Der Abbau des Radbremsmoments wird beginnend mit dem zum zweiten Zeitpunkt t2 vorliegenden Istbremsmoment M_rad_bremse_ist durch Vorgabe eines Sollbremsmoments M_rad_soll_bremse entsprechend der zweiten Rampe R4 vorgenommen.

Nach dem Beginn der ersten Rampe R1, um einen sicheren Stillstand zu gewährleisten vorzugsweise nach Erreichen eines vorgegebenen minimalen Istbremsmoments M_rad_bremse_res_min zum Zeitpunkt t4, das sich in einem Toleranzbereich über dem Sicherheits-Sollbremsmoment M_rad_bremse_res befindet, wird vom Längsdynamikregelmodul 1 bezogen auf das Sollantriebsmoment M_rad_soll_antrieb eine dritte Rampe R2 zur Reduzierung des Antriebsmoments auf einen Leerlaufwert M_rad_soll antrieb_LL begonnen.

Vor dem Beginn der zweiten Rampe R4, vorzugsweise unmittelbar nach dem Anfahrbefehl zum Zeitpunkt t3, wird vom Längsdynamikregelmodul 1 eine vierte Rampe R3 zur Erhöhung des Antriebsmoments begonnen.

Der zweiten Zeitpunkt t2, ab dem die zweite Rampe R4 beginnt, ist durch das Erreichen eines minimalen Antriebsmoments M_rad_soll_antrieb_min definiert, das in einem Toleranzbereich unterhalb des Sollantriebsmoments M_rad_antrieb_stillstand liegt, das zum Zeitpunkt t0 des Stillstandbeginns vorlag.

Der Abbau des Radbremsmoments, insbesondere entsprechend der zweiten Rampe R4, wird zumindest zunächst bis zu dem Sollbremsmoment M_rad_bremse_stillstand vorgegeben, das zum Zeitpunkt t0 des Stillstandbeginns vorlag.

Die Erhöhung des Antriebsmoments, insbesondere entsprechend der vierten Rampe R3, wird zumindest zunächst bis zu dem Sollantriebsmoment M_rad_antrieb_stillstand vorgegeben, das zum Zeitpunkt t0 des Stillstandbeginns vorlag.

Zum Zeitpunkt t5 fährt das Fahrzeug im dargestellten Beispiel wieder los. Der Stillstand, hier definiert durch die Fahrzeuggeschwindigkeit v=0 km/h bzw. v<vGrenze, wobei vGrenze bestimmt ist durch die Auflösung der Drehzahlsensoren (z. B. vGrenze = 0,1 km/h), ist damit beendet.

Um den Anfahrvorgang selbst komfortabel zu gestalten, wird vorzugsweise eine fünfte Rampe R5 ausgehend von M_rad_soll_antrieb_min vorgegeben. Diese Rampe läuft bis das so definierte Sollantriebsmoment das vom Längsdynamikregelmodul 1 für die übliche Regelung berechnete M_rad_soll_antrieb_regel erreicht hat. Ab diesem Zeitpunkt wird dieses Moment M_rad_soll_antrieb_regel ohne Manipulation an das Antriebssteuergerät 4 weitergegeben.

Ebenso ist es vorteilhaft, dem Bremsregelmodul 3 nach Ablauf der Rampe R4 eine sechste Rampe R6 vorzugeben. Diese läuft ausgehend von M_rad_bremse_stillstand solange, bis diese das vom Längsdynamikregelmodul 1 für die übliche Regelung berechnete M_rad_soll_bremse_regel erreicht hat. Ab diesem Zeitpunkt wird dieses Moment M_rad_soll_bremse_regel ohne Manipulation an das Bremsregelmodul 3 weitergegeben.

Durch die Übergabe der Bremssteuerung vom Längsdynamikregelmodul 1 an das Bremsregelmodul 3 für die Dauer des Stillstandsmanagements SM und die anschließende Übernahme der Momentenvorgabe Längsdynamikregelmodul 1 beim Wiederlosfahren wird ein abgestimmtes synchrones Verhalten des Fahrzeugs beim Übergang vom Fahrbetrieb in den Stillstand und vom Stillstand in den Fahrbetrieb erreicht. Weiterhin kann durch dieses Übergabe/Übernahme-Verfahren beim Stillstand und beim Wiederlosfahren eine eindeutige Zuordnung der Funktionsverantwortung definiert werden, wodurch die Software-Programmierung der Funktionen in den jeweiligen Modulen überschaubarer und das Gesamtfahrzeugverhalten zuverlässiger wird.

Durch den erfindungsgemäßen Ablauf der Rampen R1 und R2 wird zum einen ein komfortables Anhalten und zum anderen ein sicheres Festbremsen gewährleistet. Durch den erfindungsgemäßen Ablauf und die Überschneidung der Rampen R3 und R4 und den darauf folgenden Rampen R5 und R6 wird ein komfortables aber auch verhältnismäßig schnelles Losfahren ermöglicht.

## Patentansprüche

1. Vorrichtung zur Sicherstellung des Stillstandes eines Kraftfahrzeuges mit einem in mindestens einem elektronischen Steuergerät enthaltenen abstandsbezogenen Längsdynamikregelmodul durch das das Kraftfahrzeug unter Einhaltung eines bestimmten Abstandes zu einem Zielobjekt bis zum Stillstand abgebremst wird, wobei zumindest bis zum Erreichen des Stillstandes vom Längsdynamikregelmodul (1) an ein Bremsregelmodul (3) ein Sollbremsmoment (M_rad_soll_bremse_regel; M_rad_soll_bremse) vorgegeben wird, dass zu einem definierten ersten Zeitpunkt (t1) nach erkanntem Stillstand des Kraftfahrzeugs vom Längsdynamikregelmodul (1) ein Übergabesignal an das Bremsregelmodul (3) übermittelt wird, worauf das Bremsregelmodul (3) unabhängig von der Vorgabe eines Sollbremsmoments (M_rad_soll_bremse_regel; M_rad_soll_bremse) durch das Längsdynamikregelmodul (1) selbstständig ein Radbremsmoment im Sinne einer Feststellbremsfunktion aufbaut und/oder hält, und dass zu einem definierten zweiten Zeitpunkt (t2) nach einem Anfahrbefehl das Längsdynamikregelmodul (1) beginnend mit dem zu diesem Zeitpunkt vorliegenden Istbremsmoment (M_rad_bremse_ist) wieder selbst ein Sollbremsmoment (M_rad_soll_bremse) zum Abbau des Radbremsmoments an das Bremsregelmodul (3), durch eine Rampe vorgibt, **dadurch gekennzeichnet, dass** der zweiten Zeitpunkt (t2) nach einem Anfahrbefehl (t3), ab dem die Rampe (R4) beginnt, durch das Erreichen eines minimalen Antriebsmoments (M_rad_soll_antrieb_min) definiert ist, das in einem Toleranzbereich unterhalb des Sollantriebsmoments (M_rad_antrieb_stillstand) liegt, das zum Zeitpunkt (t0) des Stillstandbeginns vorlag.

2. Vorrichtung nach Anspruch 1, **dadurch gekennzeichnet, dass** der definierte erste Zeitpunkt nach erkanntem Stillstand des Kraftfahrzeugs zur Übermittlung des Übergabesignals unmittelbar nach erkanntem Stillstand (t0) ist.

3. Vorrichtung nach Anspruch 1, **dadurch gekennzeichnet, dass** der erste Zeitpunkt (t1) nach erkanntem Stillstand (t0) des Kraftfahrzeugs zur Übermittlung des Übergabesignals durch das Erreichen eines Sicherheits-Sollbremsmoments (M_rad_bremse_res) definiert ist, das nach dem erkannten Stillstand durch Vorgabe des Längsdynamikregelmoduls (1) vom Bremssteuermodul (3) eingestellt wird.

4. Vorrichtung nach Anspruch 3, **dadurch gekennzeichnet, dass** das Sicherheits-Sollbremsmoment (M_rad_bremse_res) ab erkanntem Stillstand bis zum ersten Zeitpunkt (t1) durch Vorgabe einer ersten Rampe (R1) eingestellt wird.

5. Vorrichtung nach einem der vorangegangenen Ansprüche, **dadurch gekennzeichnet, dass** der Abbau des Radbremsmoments beginnend mit dem zum zweiten Zeitpunkt (t2) vorliegenden Istbremsmoment (M_rad_bremse_ist) durch Vorgabe einer zweiten Rampe (R4) vorgenommen wird.

6. Vorrichtung nach einem der vorangegangenen Ansprüche, **dadurch gekennzeichnet, dass** nach dem Beginn der ersten Rampe (R1), vorzugsweise nach Erreichen (t4) eines vorgegebenen minimalen Istbremsmoments (M_rad_bremse_res_min), das sich in einem Toleranzbereich über dem Sicherheits-Sollbremsmoment (M_rad_bremse_res) befindet, vom Längsdynamikregelmodul (1) bezogen auf das Sollantriebsmoment (M_rad_soll_antrieb) eine dritte Rampe (R2) zur Reduzierung des Antriebsmoments auf einen Leerlaufwert (M_rad_soll_antrieb_LL) begonnen wird.

7. Vorrichtung nach einem der vorangegangenen Ansprüche, **dadurch gekennzeichnet, dass** vor dem Beginn der zweiten Rampe (R4), vorzugsweise unmittelbar nach dem Anfahrbefehl (t3), vom Längsdynamikregelmodul (1) eine vierte Rampe (R3) zur Erhöhung des Antriebsmoments (M_rad_antrieb) begonnen wird.

8. Vorrichtung nach einem der vorangegangenen Ansprüche, **dadurch gekennzeichnet, dass** der zweiten Zeitpunkt (t2) nach einem Anfahrbefehl, ab dem die zweite Rampe (R4) beginnt, unmittelbar nach dem Anfahrbefehl (t3) ist.

9. Vorrichtung nach einem der vorangegangenen Ansprüche, **dadurch gekennzeichnet, dass** der Abbau des Radbremsmoments, insbesondere entsprechend der zweiten Rampe (R4), zumindest zunächst bis zu dem Sollbremsmoment (M_rad_bremse_stillstand) vorgegeben wird, das zum Zeitpunkt (t0) des Stillstandbeginns vorlag.

10. Vorrichtung nach einem der vorangegangenen Ansprüche, **dadurch gekennzeichnet, dass** die Erhöhung des Antriebsmoments, insbesondere entsprechend der vierten Rampe (R3), zumindest zunächst bis zu dem Sollantriebsmoment (M_rad_antrieb_stillstand) vorgegeben wird, das zum Zeitpunkt (t0) des Stillstandbeginns vorlag.

## Claims

1. A device for ensuring the immobilisation of a motor vehicle comprising a distance-related longitudinal dynamics control module, which is contained in at least one electronic control unit and by means of which the motor vehicle is decelerated to immobilisation while maintaining a specific distance from a target object, wherein at least until immobilisation is reached, a desired brake torque (M_wheel_desired_brake_control; M_wheel_desired_brake) is predetermined by the longitudinal dynamics control module (1) for a brake control module (3), in which at a defined first time (t1) after a detected immobilisation of the vehicle, a transfer signal is transmitted by the longitudinal dynamics control module (1) to the brake control module (3), whereupon the brake control module (3), independently of the specification of a desired brake torque (M_wheel desired_brake_control; M_wheel_desired_brake) by the longitudinal dynamics control module (1), independently builds up and/or holds a wheel brake torque in the sense of a parking brake function, and in which at a defined second time (t2) after a start command, the longitudinal dynamics control module (1), starting with the actual brake torque (M_wheel_brake_actual) present at this time, again itself inputs a desired brake torque (M_wheel_desired_brake) to decrease the wheel brake torque for the brake control module (3), by a ramp, **characterised in that** the second time (t2) after a start command (t3), from which the ramp (R4) begins, is defined by the reaching of a minimum drive torque (M_wheel desired_drive_min), which lies within a tolerance range below the desired drive torque (M_wheel_drive_immobilisation), which was present at the time (t0) of the beginning of the immobilisation.

2. A device according to claim 1, **characterised in that** the defined first time after the detected immobilisation of the motor vehicle for transmitting the transfer signal is directly after the immobilisation (t0) is detected.

3. A device according to claim 1, **characterised in that** the first time (t1) after the immobilisation (t0) of the motor vehicle is detected for transmitting the transfer signal is defined by the reaching of a safety desired brake torque (M_wheet_brake_res), which is set after the immobilisation is detected by the specification of the longitudinal dynamics control module (1) by the brake control module (3).

4. A device according to claim 3, **characterised in that** the safety desired brake torque (M_wheel_brake_res) from the detected immobilisation to the first time (t1) is set by the specification of a first ramp (R1).

5. A device according to any one of the preceding claims, **characterised in that** the decrease in the wheel brake torque, beginning with the actual brake torque (M_wheel_brake_actual) present at the second time (t2), is carried out by specifying a second ramp (R4).

6. A device according to any one of the preceding claims, **characterised in that** after the beginning of the first ramp (R1), preferably after reaching (t4) a predetermined minimum actual brake torque (M_wheel_brake_res_min), which is in a tolerance range above the safety desired brake torque (M_wheel_brake_res), a third ramp (R2) for reducing the drive torque to an idle value (M_wheel_desired_drive_LL) is begun by the longitudinal dynamics control module (1) in relation to the desired drive torque (M_wheel_desired_drive).

7. A device according to any one of the preceding claims, **characterised in that** before the beginning of the second ramp (R4), preferably directly after the start command (t3), a fourth ramp (R3) is begun by the longitudinal dynamics control module (1) to increase the drive torque (M_whee_drive).

8. A device according to any one of the preceding claims, **characterised in that** the second time (t2) after a start command, from which the second ramp (R4) begins, is directly after the start command (t3).

9. A device according to any one of the preceding claims, **characterised in that** the decrease in the wheel brake torque, is predetermined more especially in accordance with the second ramp (R4), at least initially up to the desired brake torque (M_wheel_brake_immobilisation), which was present at the time (t0) of the beginning of immobilisation.

10. A device according to any one of the preceding claims, **characterised in that** the increase in the drive torque is predetermined more especially in accordance with the fourth ramp (R3) at least initially up to the desired drive torque (M_wheel_drive_immobilisation), which was present at the time (t0) of the beginning of immobilisation.

## Revendications

1. Dispositif pour assurer l'arrêt d'un véhicule automobile comportant au moins un module de régulation de la dynamique longitudinale rapportée à la distance dans au moins un appareil de commande électronique qui freine le véhicule jusqu'à l'arrêt, en respectant une distance déterminée par rapport à l'objet cible,
* au moins jusqu'à l'arrêt, le module de régulation de la dynamique longitudinale (1) prédéfinit pour un module de régulation de frein (3), un couple de freinage de consigne (M_rad_soll_bremse_regel ; M_rad_soll_bremse), de façon qu'à un premier instant (t1) prédéfini après reconnaissance de l'arrêt du véhicule par le module de régulation de la dynamique longitudinale (1), un signal de transfert est transmis au module de régulation de frein (3), et ensuite, le module de régulation de frein (3), indépendamment de la consigne d'un couple de freinage de consigne (M_rad_soll_bremse_regel ; M_rad_soll_bremse) du module de régulation de la dynamique longitudinale (1), établit et/ou maintient de lui-même un couple de freinage de roue dans le sens d'une fonction de freinage de blocage, et
* à un second instant défini (t2) après un ordre de démarrage, le module de régulation de la dynamique longitudinale (1) commençant par le couple de freinage réel existant à cet instant (M_rad_bremse_ist), prédéfinit de nouveau de lui-même un couple de freinage de consigne (M_rad_soll_bremse) pour établir le couple de freinage de roue pour le module de régulation de frein (3) par une rampe,
**caractérisé en ce que**
le second instant (t2) après un ordre de démarrage (t3) à partir duquel commence la rampe (R4) est défini par le fait d'atteindre un couple d'entraînement minimum (M_rad_soll_antrieb_min) situé dans une plage de tolérance sous le couple d'entraînement de consigne (M_rad_antrieb_stillstand) qui existait à l'instant (t0) du début de l'arrêt.

2. Dispositif selon la revendication 1,
**caractérisé en ce que**
le premier instant défini après reconnaissance de l'arrêt du véhicule automobile pour la transmission du signal de transfert est directement après la reconnaissance de l'arrêt (t0).

3. Dispositif selon la revendication 1,
**caractérisé en ce que**
le premier instant (t1) après l'arrêt reconnu (t0) du véhicule automobile pour transmettre le signal de transfert est défini par le fait d'atteindre un couple de freinage de consigne de sécurité (M_rad_bremse_res) qui, après la reconnaissance de l'arrêt, est réglé par la prédéfinition du module de régulation de la dynamique longitudinale (1) par le module de commande de frein (3).

4. Dispositif selon la revendication 3,
**caractérisé en ce que**
le couple de freinage de consigne de sécurité (M_rad_bremse_res) est appliqué à partir de la connaissance de l'arrêt jusqu'au premier instant (t1) par la prédéfinition d'une première rampe (R1).

5. Dispositif selon l'une des revendications précédentes,
**caractérisé en ce que**
la suppression du couple de freinage de roue se fait en commençant par le couple de freinage réel (M_rad_bremse_ist) appliqué au second instant (t2) en prédéfinissant une seconde rampe (R4).

6. Dispositif selon l'une des revendications précédentes,
**caractérisé en ce qu'**
après le début de la première rampe (R1), de préférence après avoir atteint (t4) un couple de freinage réel minimum, prédéfini, (M_rad_bremse_res_min), qui se trouve dans une plage de tolérance au-dessus du couple de freinage de consigne de sécurité (M_rad_bremse_res), le module de régulation de la dynamique longitudinale (1) commence par rapport au couple d'entraînement de consigne (M_rad_soll_antrieb), une troisième rampe (R2) pour réduire le couple d'entraînement à la valeur de la marche à vide (M_rad_soll_antrieb_LL).

7. Dispositif selon l'une des revendications précédentes,
**caractérisé en ce qu'**
avant le début de la seconde rampe (R4), de préférence directement après l'ordre de démarrage (t3), le module de régulation de la dynamique longitudinale (1) commence une quatrième rampe (R3) pour augmenter le couple d'entraînement (M_rad_antrieb).

8. Dispositif selon l'une des revendications précédentes,
**caractérisé en ce que**
le second instant après un ordre de démarrage à partir duquel commence la seconde rampe (R4) se situe directement après l'ordre de démarrage (t3).

9. Dispositif selon l'une des revendications précédentes,
**caractérisé en ce que**
la réduction du couple de freinage de roue est prédéfinie notamment en fonction de la seconde rampe (R4) au moins jusqu'au couple de freinage de consigne (M_rad_bremse_stillstand), qui existait à l'instant (t0) du début de l'arrêt.

10. Dispositif selon l'une des revendications précédentes,
**caractérisé en ce que**
l'augmentation du couple d'entraînement est prédéfinie notamment en fonction de la quatrième rampe (R3), au moins tout d'abord jusqu'au couple d'entraînement de consigne (M_rad_antrieb_stillstand), qui existait à l'instant (t0) du début de l'arrêt.
